# EUROPÄISCHE PATENTSCHRIFT

(11) **EP 1 110 830 B1**
(45) Veröffentlichungstag und Bekanntmachung des Hinweises auf die Patenterteilung: **25.05.2005**
(21) Anmeldenummer: 00126350.8
(22) Anmeldetag: 02.12.2000
(51) Int. Cl.: B60R 25/04, B60R 25/00, E05B 49/00

(54) **Vorrichtung zur Aktivierung und/oder Deaktivierung einer Sicherheitseinrichtung für ein Kraftfahrzeug**
Activation and/or deactivation device for a security system in a vehicle
Dispositif d'activation et/ou désactivation d'un dispositif de sécurité dans un véhicule

(30) Priorität: 05.02.2000 DE 10005253; 22.12.1999 DE 19962005
(43) Veröffentlichungstag der Anmeldung: 27.06.2001
(73) Patentinhaber: Siemens Aktiengesellschaft, 80333 München (DE)
(72) Erfinder: März, Uwe, 65760 Eschborn (DE)

(56) Entgegenhaltungen:
- EP-A- 0 816 192
- WO-A-95/08458

## Beschreibung

Die Erfindung betrifft eine Vorrichtung zur Aktivierung und/oder Deaktivierung einer Sicherheitseinrichtung für ein Kraftfahrzeug gemäß dem Oberbegriff des Patentanspruchs 1.

Bekannte Vorrichtungen zur Aktivierung und/oder Deaktivierung eines Schließsystems in einem Kraftfahrzeug besitzen einen tragbaren Sender, welcher nach Aufforderung eine codierte Information an eine fest im Kraftfahrzeug installierte Empfängereinrichtung aussendet. Die Empfängereinrichtung vergleicht die übertragene codierte Information mit einer in ihr erzeugten vorgegebenen Information. Bei Übereinstimmung wird die Sicherheitseinrichtung durch die Empfangseinrichtung angesteuert.

Die Sicherheitseinrichtung kann dabei einmal als Schließsystem des Kraftfahrzeuges aber auch als Wegfahrsperre ausgebildet sein. Dabei wird das Schließsystem über eine Funkfernbedienung, die bereits über mehrere Meter wirksam ist, angesteuert, während die Wegfahrsperre durch induktive Energieübertragung vom Kraftfahrzeug zur tragbaren Sendeeinheit wirksam wird.

Bei Ausfall der tragbaren Sendeeinheit infolge einer entladenen Batterie in der Sendeeinheit oder einer Störung in der induktiven Energieübertragung ist das Fahrzeug immobil.

Darüber hinaus weisen die tragbaren Sendeeinheiten noch einen mechanischen Schlüssel auf, die es dem Fahrer ermöglichen, bei Ausfall der Fernbedienung das Fahrzeug zu öffnen und zu starten.

Eine Wegfahrsperre durch induktive Energieübertragung ist aus der EP 0 816 192 A1 bekannt, bei welcher ein Schlüssel in ein Zündschloss eingeführt wird. Zur Ankündigung einer neuen Codierung wird ein Schlüssel mit bekannter Codierung genutzt, welcher mehrfach im Schloß bewegt wird. Die so erstellte mechanische Pulsfolge wird in eine elektrische Pulsfolge umgewandelt und an ein Steuergerät geführt, das erkennt, dass eine Neucodierung erfolgen soll. Für den normalen Startvorgang als auch für die Registrierung einer weiteren Codierung können auch statt ein Zündschlüssel, die Bremspedale oder der Blinkerscholter benutzt werden.

Der Erfindung liegt die Aufgabe zugrunde, eine Vorrichtung anzugeben, die es dem Fahrer gestattet, bei Ausfall der tragbaren Sendeeinheit die Eingabe der Codierung ohne mechanischen Schlüssel und außerhalb des Fahrzeugs zu erledigen.

Erfindungsgemäß wird die Aufgabe durch die Merkmale des Kennzeichens des Patentanspruchs 1 gelöst.

Der Vorteil der Erfindung besteht darin, dass durch Eingabe der notwendigen Codierung nur der legitimierte Fahrer das Fahrzeug nutzen kann. Aufgrund der Benutzung von an sich im Fahrzeug vorhandener Bedienelemente wird eine Redundanz geschaffen, wobei auf den mechanischen Schlüssel verzichtet werden kann.

In einer Ausgestaltung ist die Bedieneinrichtung über eine Datenleitung mit der Auswertevorrichtung verbunden. Da verschiedene Steuergeräte des Kraftfahrzeuges ohnehin über ein Bussystem verbunden sind, bedarf es keines Verkabelungsaufwandes, um das redundante System herzustellen. Es ist lediglich ein ... geringfügiger Programmieraufwand in dem zugehörigen Steuergerät der Bedieneinheit notwendig, um die manuell eingegebenen Impulse auszuwerten.

In einer Ausgestaltung ist die Bedieneinrichtung ein Bedienhebel, welcher mit einer Geschwindigkeistregeleinheit verbunden ist, die an die Auswertevorrichtung führt. Ein solcher Bedienhebel dient normalerweise der Einstellung der Wunschgeschwindigkeit des Fahrers. Da die Geschwindigkeitsregeleinheit im vorgesehen Fall mit der Fahrzeugbatterie verbunden ist, ist immer gewährleistet, daß bei der mechanischen Eingabe von Impulsen diese auch in elektrische Impulse umgesetzt werden können, obwohl das Fahrzeug nicht gestartet wird.

Alternativ dazu ist die Bedieneinrichtung ein Türgriff des Kraftfahrzeuges, welche über eine Schloßsteuereinrichtung mit der Empfängervorrichtung verbunden ist.

In einer Ausgestaltung wird von der Auswertevorrichtung drahtlos Energie an die tragbare Sendeeinheit übertragen, welche nach dem Empfang der Energie die codierte Information aussendet.

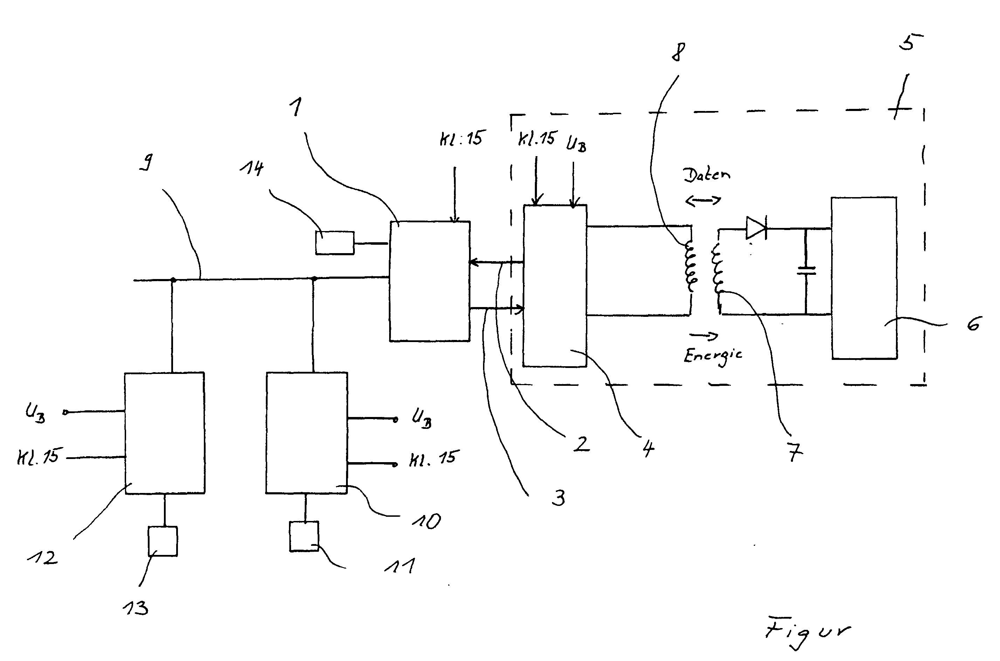

Die Erfindung lässt zahlreiche Ausführungsformen zu. Eine davon soll anhand der in der Zeichnung dargestellten Figur erläutert werden.

Die in der Figur schematisch dargestellte Diebstahlsicherungseinrichtung umfaßt ein im wesentlichen aus einem Mikroprozessor bestehendes Steuergerät 1, welches über eine Leitung 2 und eine Leitung 3 mit der Sende-/Empfangseinrichtung 4 einer Wegfahrsperre 5 verbunden ist.
Neben der Sende-/Empfangseinrichtung 4, die im Kraftfahrzeug angeordnet ist, besteht die Wegfahrsperre aus einer tragbaren Sendeeinheit 6, die üblicherweise im Griff eines Schlüssels angeordnet ist.

Die dargestellte Wegfahrsperre 5 arbeitet als Transponder. An der Sendeeinheit 6 ist eine Spule 7 angeordnet. Beim Einführen des Kraftfahrzeugschlüssels in das Zündschloß liegt diese Spule 7 einer zweiten Spule 8 gegenüber, welche fest im Kraftfahrzeug um das Zündschloß herum installiert ist. Diese ebenfalls fest im Kraftfahrzeug installierte Spule 8 ist mit der Sende-/Empfangseinrichtung 4 der Wegfahrsperre 5 verbunden.
Die Sende-/Empfangseinrichtung 4 ist außerdem mit der Batteriespannung U_{B} des Kraftfahrzeuges sowie mit Klemme 15 (Zündung ein) verbunden. Darüber hinaus ist das Steuergerät 1 über einen Datenbus 9 mit einem Steuergerät 10 für eine Geschwindigkeitsregelung verbunden, an welche ein Bedienhebel 11 angeschlossen ist. Eine Steuereinheit 12 für ein Zentralverriegelung ist ebenfalls an den Datenbus angeschlossen, wobei die Steuereinheit 12 mit dem Türgriff 13 eines elektrisch betriebenen Schlosses verbunden ist.

Befindet sich die tragbare Sendeeinheit 6 in der Nähe der Spule 8 wird Energie zur Versorgung des Transponders 5 in die zweite Spule 7 der tragbaren Sendeeinheit eingekoppelt. Zur Übertragung der von dem Transponder 5 als Antwort erzeugten Signale erfolgt eine Veränderung der Belastung der zweiten Spule 7, die sich an der ersten Spule 8 durch eine Modulation der Wechselspannung bemerkbar macht. Dadurch gelingt ist kontaktlos und nur mit einem Spulenpaar ohne eigene Stromversorgung in der Sendeeinheit 6 Daten aus dem Transponder 5 auszulesen.

Im Transponder 5 ist eine der tragbaren Sendeeinheit eigene Codierung abgelegt, welche bei Energieübertragung vom Kraftfahrzeug zur Sendeeinheit 6 aktiviert und dem Steuergerät 1 des Kraftfahrzeuges zugeleitet wird, welches diese Codierung mit einer Sollcodierung vergleicht und bei Übereinstimmung die Diebstahlsicherung 14 aufhebt.

Ist nun die Energieübertragung gestört, kann das Kraftfahrzeug nicht gestartet werden. In diesem Fall kann der berechtigte Nutzer, welcher die codierte Information kennt mit Hilfe des Bedienhebels 11 manuell eine Impulsfolge eingeben, welche von dem Steuergerät 10 detektiert wird in eine elektrische Impulsfolge umgewandelt wird. Das Steuergerät 10 sendet diese elektrische Codierung über den Datenbus 9 an das Steuergerät 1 der Wegfahrsperre 5.

Äquivalent dazu kann die Codierung auch über den Türgriff 13 eingegeben werden. Das Steuergerät 12, welches ebenfalls mit der Batteriespannung verbunden ist, wertet die zeitlichen Abstände der Impulse aus und wandelt diese ebenfalls in ein elektrisches Signal um. Die Steuergeräte 10 und 12 leiten die Impulse nur dann weiter, wenn Klemme 15 des Kraftfahrzeuges aus ist. Im anderen Fall werden mechanische Eingaben im Sinne ihrer eigentlichen Funktion bewertet.

Aufgrund der angegebenen Einrichtung ist die Wegfahrsperre 5 jederzeit einsetzbar, so daß das Fahrzeug auch bei Ausfall der tragbaren Sendeeinheit werden kann.

## Patentansprüche

1. Vorrichtung zur Aktivierung und/oder Deaktivierung einer Sicherheitseinrichtung für ein Kraftfahrzeug, mit einer tragbaren Sendeeinheit (6) zum drahtlosen Senden einer codierten Information, welche von einer Empfängervorrichtung (4) empfangen und mit einer vorgegebenen codierten Information verglichen wird, wobei von der Auswertevorrichtung (1) im Fall der Übereinstimmung beider Informationen ein Ansteuersignal an die Sicherheitseinrichtung abgebbar ist und die Empfängervorrichtung mit einer mechanischen Einrichtung zur Betätigung der Sicherheitseinrichtung verbunden ist, mittels welcher manuell eingebbare Informationen in elektrische Impulse umgewandelt und der Auswertevorrichtung zur Auswertung zuführbar sind, wobei über eine an sich im Kraftfahrzeug vorhandene Bedieneinrichtung die codierte Information manuell eingebbar ist und die Bedieneinrichtung die manuell eingegebenen Impulse in elektrische Impulse umwandelt, **dadurch gekennzeichnet, dass** die Bedieneinrichtung ein Türgriff (13) ist, welcher über eine Schlosssteuereinrichtung (12) und eine Datenleitung (9) mit der Auswertevorrichtung (1 ) verbunden ist.

2. Vorrichtung nach Anspruch 1, **dadurch gekennzeichnet, dass** die Schlosssteuereinrichtung (12) mit einem als Elektromotor ausgebildeten Stellantrieb verbunden ist.

3. Vorrichtung nach einem der vorhergehenden Ansprüche, **dadurch gekennzeichnet, dass** von der Auswertevorrichtung (1) drahtlos Energie an die tragbare Sendeeinheit (6) übertragen wird, welche nach dem Empfang der Energie die codierte Information aussendet.

## Claims

1. A device for activating and/or deactivating a security device for a motor vehicle, having a portable transmitter unit (6) for the wirefree transmission of encoded information which is received by a receiver device (4) and compared with a predefined encoded information item, in which, when both information items correspond, an actuation signal can be output to the safety device by the evaluation device (1) and the receiver device is connected to a mechanical device for activating the security device, by means of which information which has been input manually is converted into electrical pulses and can be fed to the evaluation device for evaluation, and the encoded information can be input manually by means of an operator control device which is present per se in the motor vehicle, and the operator control device converts the pulses which have been input manually into electrical pulses, **characterized in that** the operator control device is a door handle (13) which is connected to the evaluation device (1) via a lock control device (12) and a data line (9).

2. The device as claimed in claim 1, **characterized in that** the lock control device (12) is connected to an actuator drive which is embodied as an electric motor.

3. The device as claimed in one of the preceding claims, **characterized in that** energy is transmitted in a wirefree fashion from the evaluation device (1) to the portable transmitter unit (6) which emits the encoded information item after the reception of the energy.

## Revendications

1. Dispositif permettant d'activer et/ou de désactiver un système de sécurité pour un véhicule automobile, comportant une unité émettrice portable (6) destinée à émettre sans fil une information codée, qui est captée par un dispositif récepteur (4), puis comparée à une information codée donnée, le dispositif d'évaluation (1) pouvant délivrer, dans le cas de la concordance des deux informations, un signal d'excitation au système de sécurité et le dispositif récepteur étant relié à un dispositif mécanique permettant d'actionner le système de sécurité, au moyen duquel des informations pouvant être entrées manuellement sont converties en impulsions électriques et transmises au dispositif d'évaluation pour leur analyse, l'information codée pouvant être entrée manuellement par l'intermédiaire d'un dispositif de commande existant de toutes façons dans le véhicule automobile et le dispositif de commande transformant les impulsions entrées manuellement en impulsions électriques, **caractérisé par le fait que** le dispositif de commande est une poignée de portière (13) qui est reliée, par l'intermédiaire d'un dispositif de commande de la serrure (12) et d'un conducteur de données (9) au dispositif d'évaluation (1 ).

2. Dispositif selon la revendication 1 **caractérisé par le fait que** le dispositif de commande de la serrure (12) est relié à un mécanisme de commande constitué par un moteur électrique.

3. Dispositif selon l'une des revendications précédentes **caractérisé par le fait que** le dispositif d'évaluation (1) transmet sans fil de l'énergie à l'unité émettrice portable (6), laquelle, après avoir reçu l'énergie, émet l'information codée.
